# DEMANDE DE BREVET EUROPEEN

(11) **EP 0 533 547 A1**
(43) Date de publication de la demande: **24.03.1993**
(21) Numéro de dépôt: 92402511.7
(22) Date de dépôt: 14.09.1992
(51) Int. Cl.: G21C 19/105

(54) **Grappin orientable de manutention d'assemblage combustible nucléaire**

(30) Priorité: 17.09.1991 FR 9111433
(71) Demandeur: FRAMATOME, 92400 Courbevoie (FR)
(72) Inventeur: Canongia, Paul, F-01700 Beynost (FR); Menicot, Christian, Les Chanavaries, F-69960 Colombe (FR)
(74) Mandataire: Fort, Jacques

(57) **Abrégé**

Le grappin comprend une partie supérieure (14) destinée à être solidarisée de la partie basse (3) d'un mât vertical d'une machine de manutention et des moyens de verrouillage sur la pièce d'extrémité supérieure (11) d'un assemblage combustible nucléaire. Des moyens déflecteurs relient la partie supérieure (14) aux moyens de verrouillage (12) et permettent d'incliner l'axe longitudinal des moyens de verrouillage, et donc de l'axe de la pièce d'extrémité (11) qui lui est fixée, par rapport à l'axe vertical (16) de la partie supérieure.

## Description

L'invention concerne un grappin de manutention pour une machine de manutention d'assemblage combustible nucléaire. Elle trouve une application particulièrement importante dans le rechargement d'assemblages combustibles nucléaires dans un réacteur après qu'ils aient subi un premier cycle de fonctionnement, c'est-à-dire lorsqu'un assemblage de combustible irradié ayant subi des déformations doit être ré-utilisé à un autre emplacement du coeur du réacteur.

On connaît déjà de nombreux grappins de manutention du type comprenant une partie supérieure destinée à être solidarisée de la partie basse d'un mât vertical d'une machine de manutention et des moyens de verrouillage sur la pièce d'extrémité supérieure d'un assemblage combustible nucléaire.

Comme l'indique déjà le document FR-A-2 588 689 (demande de brevet FR n° 85 15122), l'insertion d'un assemblage combustible irradié se heurte au problème des déformations que peut avoir subies cet assemblage lors d'un premier passage en réacteur.

Pour faciliter la mise en place de tels assemblages déformés, on a déjà proposer de munir le mât, auquel est fixée la partie supérieure, d'éléments rigides de maintien de l'assemblage. On a également proposé de placer un guide d'entrée, à côté de l'emplacement où doit venir se loger l'assemblage déformé. Des solutions de ce genre sont décrites dans le document FR-A-2 588 689. Elles donnent des résultats satisfaisants. Mais la première complique notablement la machine de chargement. La seconde oblige à manipuler un élément de guidage, ce qui allonge la durée d'un rechargement.

L'invention vise à fournir un grappin de manutention permettant de mettre en place un assemblage déformé sans nécessiter le recours à des éléments de guidage portés par un mât ou mis en place avant l'assemblage.

Dans ce but l'invention propose notamment un grappin du type ci-dessus défini, caractérisé par des moyens déflecteurs reliant la partie supérieure aux moyens de verrouillage et permettant d'incliner l'axe longitudinal des moyens de verrouillage, et donc de l'axe d'une pièce d'extrémité ou embout supérieur qui lui est fixé, par rapport à l'axe vertical de la partie supérieure.

Dans ce qui suit, le terme "verrouillage" est à interpréter comme désignant un type de liaison désarmable imposant aux deux parties reliées entre elles non seulement de se déplacer simultanément, mais aussi de rester dans le même alignement. De tels moyens de verrouillage sont couramment utilisés dans les grappins de manutention d'assemblage.

Les moyens déflecteurs seront généralement prévus pour donner aux moyens de verrouillage une inclinaison de sens quelconque, mais ajustable à volonté, dans un domaine angulaire de quelques degrés autour de l'axe de la partie supérieure. Ils peuvent alors comporter d'une part un joint universel entre la partie supérieure et les moyens déflecteurs et d'autre part des organes moteurs, tels que des vérins, permettant d'orienter les moyens de verrouillage. Cependant, il peut être suffisant dans certains cas de prévoir des moyens déflecteurs ne permettant d'orienter les moyens de verrouillage qu'autour d'un seul axe, orthogonal à l'axe de la partie supérieure.

Dans la plupart des cas les moyens déflecteurs peuvent être regardés comme comprenant un joint universel et des moyens moteurs reliant la partie supérieure à une partie inférieure munie des moyens de verrouillage. Par exemple le joint universel peut comprendre une rotule excentrée par rapport à l'axe longitudinal de la partie supérieure. Les moyens moteurs peuvent être alors des vérins répartis autour de l'axe de la partie supérieure. Le joint universel peut aussi être une rotule dont le centre est situé sur l'axe longitudinal de la partie inférieure du mât. Les moyens moteurs sont alors interposés entre l'élément mâle de la rotule, appartenant à une partie inférieure du grapin munie des moyens de verrouillage, et la partie supérieure.

Dans un mode de réalisation simplifiée, les moyens déflecteurs comprennent, pour chacun des crochets de pince appartenant aux moyens de verrouillage, un mécanisme de réglage individuel du niveau du bec d'accrochage.

L'invention comprend, mis à part ces dispositions principales, certaines autres dispositions qui s'utilisent de préférence en même temps et dont il sera plus explicitement question ci-après.

L'utilisation d'un grappin selon l'invention permet dans tous les cas de s'affranchir de dispositifs supplémentaires de guidage, tels que ceux décrits dans le document FR 2 588 689, qu'il faut repositionner avec la machine de manutention, avant la mise en place d'un nouvel assemblage combustible. L'utilisation du grappin orientable actionné à distance permet en conséquence de recharger le coeur d'un réacteur nucléaire dans un temps plus court.

Par ailleurs, la dose de radioactivité reçue par les opérateurs est sensiblement réduite puisqu'ils travaillent beaucoup moins de temps dans une zone très activée.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 est une vue schématique en élévation montrant la constitution générale d'une machine de manutention pouvant être munie d'un grappin suivant l'invention représenté accroché à un assemblage dont la déformation a été très exagérée pour plus de clarté ;
- la figure 2 montre, de façon très schématique et en coupe suivant un plan passant par l'axe, un grappin orientable selon un premier mode de réalisation ;
- les figures 3 et 4, similaires à la figure 2, montrent deux variantes.

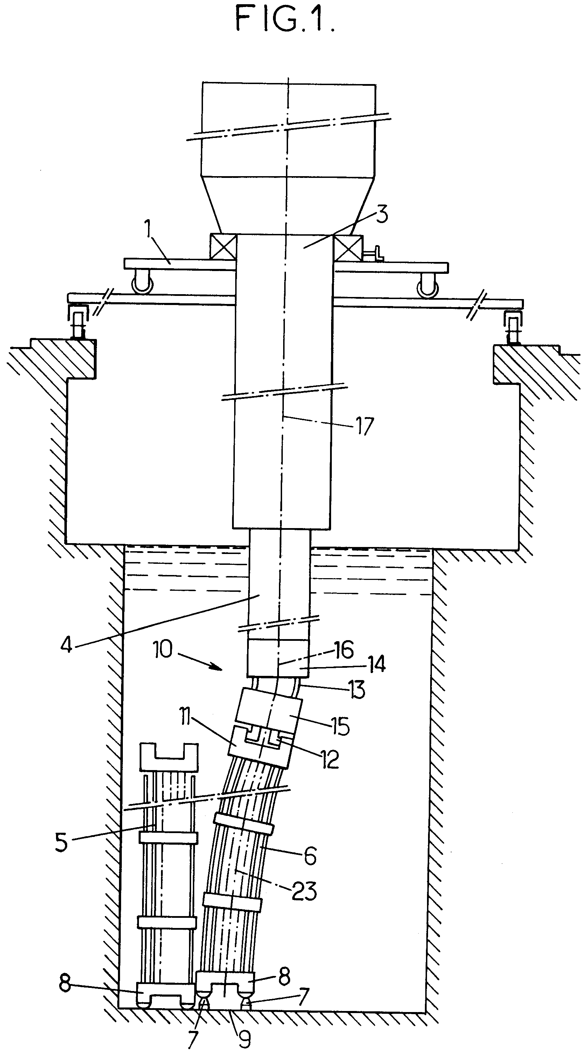

La machine de manutention d'assemblage dont la constitution générale est montrée en figure 1 est similaire à celle décrite dans le document FR-A-2 588 689 auquel on pourra se reporter. Elle ne sera en conséquence décrite que très sommairement ici. La machine comporte une plate-forme 1 déplaçable horizontalement de façon à permettre d'amener un mât vertical 3 au-dessus de tous les emplacements de réception d'assemblage combustible matérialisés par des pions de centrage. Ces emplacements peuvent par exemple être dans la cuve (non représenté) d'un réacteur nucléaire ou dans une piscine de stockage de combustible. Le fond de la piscine ou la plaque inférieure de coeur 9 du réacteur comporte, à chaque emplacement de réception d'un assemblage, des pions 7 de centrage de l'embout inférieur 8 d'un assemblage. La figure 1 montre un assemblage 5 déjà en place et un assemblage 6 à mettre en place.

Le mât 3 est prévu ou monté de façon que sa partie basse soit déplaçable verticalement et en rotation autour de l'axe vertical du mât. Il peut pour cela avoir la constitution décrite dans le document FR-A-2 588 689 déjà cité.

Pour permettre d'incliner d'un angle ajustable l'axe de la pièce d'extrémité ou embout supérieur 11 d'un assemblage à mettre en place, le grappin 10 comporte une partie supérieure 14 destinée à être fixée de façon rigide sur la partie inférieure 4 du mât de façon telle que son axe longitudinal 16 coïncide avec l'axe longitudinal 17 du mât et une partie inférieure 15 munie de moyens de verrouillage sur l'embout supérieur 11. Ces parties sont reliées par des moyens déflecteurs 13.

Le grappin permet ainsi de placer l'assemblage combustible de façon que l'axe de son embout inférieur 8 soit vertical et vienne s'insérer sur les pions 7.

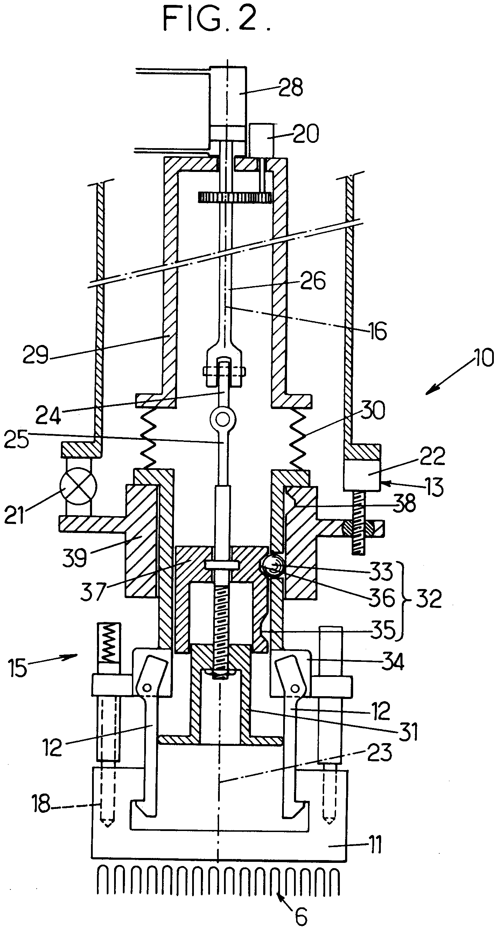

On décrira maintenant, en faisant référence aux figures 2 à 4, divers modes de réalisation possibles du grappin 10.

La partie supérieure 14 du grappin 10 peut avoir une constitution générale connue. La partie supérieure montrée en figure 2 comporte un carter, généralement à section droite cylindrique ou carrée, fixé à la partie basse 4 du mât de façon rigide. La partie inférieure 15 du grappin porte les moyens de verrouillage. Dans le cas représenté, elle comporte un manchon 39 dans lequel peut coulisser, le long de l'axe 23 de la partie inférieure, un support 34.

Les moyens de verrouillage de la partie inférieure 15 sur un embout supérieur 11 comporte des moyens de centrage et des moyens d'accrochage.

Les moyens de centrage représentés comportent deux pions 18 ou davantage, portés par une bride inférieure du support 34 et repoussés vers le bas par des ressorts. Ces pions sont destinés à s'engager dans des trous prévus à cet effet dans l'embout supérieur 11 et à aligner l'embout supérieur avec la partie inférieure 15 du grappin.

Les moyens d'accrochage comportent des crochets de pince 12 articulés autour d'axes prévus sur le support 34 et destinés à venir s'engager sous des épaulements de l'embout 11.

Le mécanisme de commande des crochets de pince 12 montrés en figure 2 comprend un vérin à double effet 28 dont le piston est relié par une tringlerie à un moyeu 31 placé dans la partie inférieure 15. Le vérin 28 représenté est à commande hydraulique. Son cylindre est porté par une cloche 29 solidarisée du support 34 par des moyens 30 susceptibles de fléchir légèrement pour absorber les écarts dûs à la mise en oeuvre des moyens déflecteurs 13. La tringlerie de liaison du piston au moyeu 31 comporte deux tiges 26 et 25 ayant une articulation à deux degrés de liberté, pouvant être constituée par un joint de cardan 24.

Le vérin 28, qui sert au fonctionnement normal des moyens de verrouillage, peut être complété par une commande de fonctionnement de secours.

Le mécanisme de commande de secours montré en figure 2 comporte un dispositif d'entrainement lent, constitué par un moteur 20 dont l'arbre de sortie entraîne en rotation la tige 26 par l'intermédiaire d'un engrenage. La partie terminale de la tige 25 est alors filetée de façon à pouvoir entraîner le moyeu 31, immobilisé en rotation, le long de l'axe 23.

La figure 2 montre que le moyeu 31, lorsqu'il est en position basse, maintient les crochets de pince 12 écartés. Lorsqu'il est remonté au-dessus des axes d'articulation des crochets de pince 12, il rapproche les crochets et libère l'embout supérieur 11.

Il est souhaitable d'interdire une manoeuvre intempestive de déverrouillage des crochets au cours des opérations de manutention et notamment au cours des transports. Pour cela, le grappin 10 est muni d'un verrouillage de sécurité 32. Il comporte une douille 37 liée en translation à la tige 25, par exemple par emprisonnement d'une collerette de la tige dans un chambrage de la douille 37 qui est montée pour coulisser dans le support 34 sans tourner. Dans la surface cylindrique externe de la douille sont ménagées deux encoches 35 et 36 dont l'écartement vertical correspond à un débattement vertical possible du manchon 39 par rapport au support 34. Dans la paroi de ce support est percé un trou radial de réception d'une bille de verrouillage 33. Lorsque le manchon 39 est en position basse par rapport au support, la bille est en face d'une encoche 38 du manchon 39. On voit que la bille 33 (ou plusieurs billes réparties autour de l'axe de la douille) interdisent à la douille 37 et donc au moyeu 31 de se déplacer lorsque le poids d'un assemblage suspendu au grappin maintient celui-ci dans la disposition montrée en figure 2.

La partie supérieure 14 et la partie inférieure 15 du grappin sont reliées par les moyens déflecteurs 13. Dans le mode de réalisation montré en figure 2, ces moyens comprennent un joint universel, telle qu'une rotule 21, reliant des brides du carter et du manchon 39, placées en regard. La rotule est alors située à distance de l'axe 16 de la partie supérieure. Ils comprennent également des moyens moteurs. Si on souhaite pouvoir incliner la partie inférieure dans un sens quelconque, ces moyens comportent plusieurs vérins à double effet, par exemple deux vérins placés à 120° l'un de l'autre et de la rotule 21. Dans le cas illustré sur la figure 2, ces vérins sont des vérins rotatifs, par exemple des vérins électriques, et leur arbre de sortie fileté est vissé dans un écrou porté par la bride du manchon 39.

La mise en oeuvre du grappin de la figure 2 ressort directement de la description qui précède.

Pour saisir un assemblage, on amène le mât au-dessus de son embout supérieur 11. On descend le grappin, alors que le moyeu 31 est maintenu en position haute par le vérin 28 et le verrouillage de sécurité, de façon à engager les doigts de centrage 18 dans l'embout supérieur de l'assemblage à saisir.

En fin de descente de la partie basse du bras, le manchon 39 descend par rapport au support jusqu'à ce que l'encoche 38 coïncide avec le trou de réception de la bille 33. On peut alors commander le vérin 28 pour écarter les crochets de pince et verrouiller le grappin sur l'embout supérieur 11. En cas de nécessité, on peut régler l'écartement des crochets à l'aide du moteur 20 d'entraînement en rotation de la tige 26.

On peut alors soulever le grappin à l'aide du mât. Dès le début du soulèvement de l'assemblage combustible stocké dans la piscine du réacteur, il y a déplacement relatif du manchon 39 et du support 34 et le verrouillage de sécurité interdit ensuite la libération intempestive de l'assemblage. Les vérins 22 peuvent être mis être mis en oeuvre pour incliner l'axe de l'embout supérieur 11 jusqu'à ce que l'axe de l'embout inférieur 8 soit exactement vertical. Les opérations de chargement de l'assemblage par amenée à son emplacement sur la plaque inférieure de coeur peuvent alors être classiques.

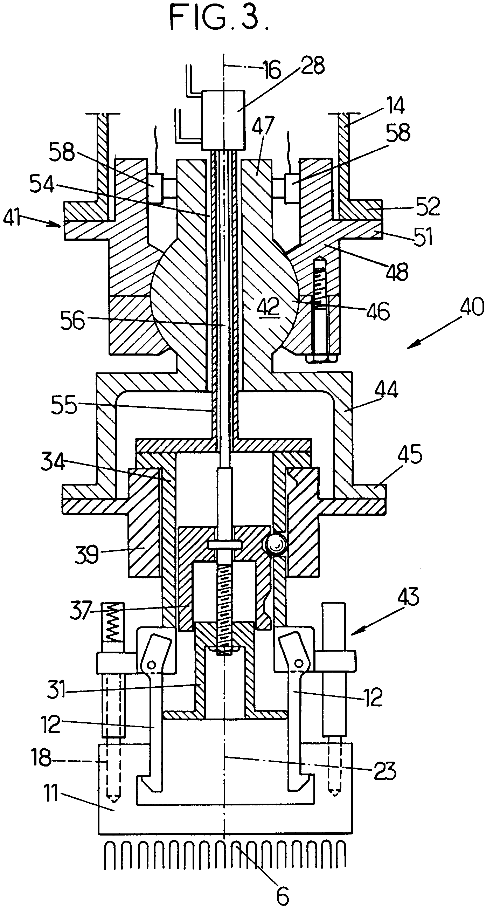

La figure 3 montre une variante de réalisation de l'invention. La différence principale entre cette variante et le mode de réalisation de la figure 2 consiste en l'utilisation d'un joint universel déposé dans l'axe du grappin.

Seuls seront décrits les éléments du grappin de la figure 3 qui diffèrent de ceux de la figure 2.

Le grappin 40 montré en figure 3 comprend encore une partie supérieure 41 et une partie inférieure 43. Cette dernière est similaire à la partie inférieure 15 montrée en figure 2.

Les moyens déflecteurs comprennent encore un joint universel et des moyens moteurs. Mais le centre du joint universel 42 est placé sur l'axe 16 de la partie supérieure. Il est constitué par une rotule dont la partie mâle 46 en forme de boule est prolongée vers le haut par un embout 47 et vers le bas par une cuvette 44 ayant une bride terminale 45 fixée au manchon 39. Un conduit 54 percé dans l'axe de l'élément mâle 46 livre passage à un fourreau tubulaire 55 fixé au support 34 et traversé par une tringle 56 de commande des moyens de verrouillage par le vérin 28 dont le cylindre est fixé au fourreau.

La partie femelle 48 est constituée en plusieurs pièces assemblées et délimite un logement hémisphérique concave de réception de la boule 46 de la partie mâle. Elle est fixée par une bride 51 à une bride terminale 52 de la partie supérieure 14.

Les moyens moteurs disposés entre la partie femelle et la partie mâle peuvent avoir diverses constitutions. Dans le cas illustré sur la figure 3, ils sont constitués par des vérins miniatures 58 régulièrement répartis angulairement autour de l'embout 47, généralement au nombre de trois ou quatre, permettant de donner l'inclinaison désirée rà l'embout. Ces vérins sont à double effet et peuvent être à commande électrique ou hydraulique.

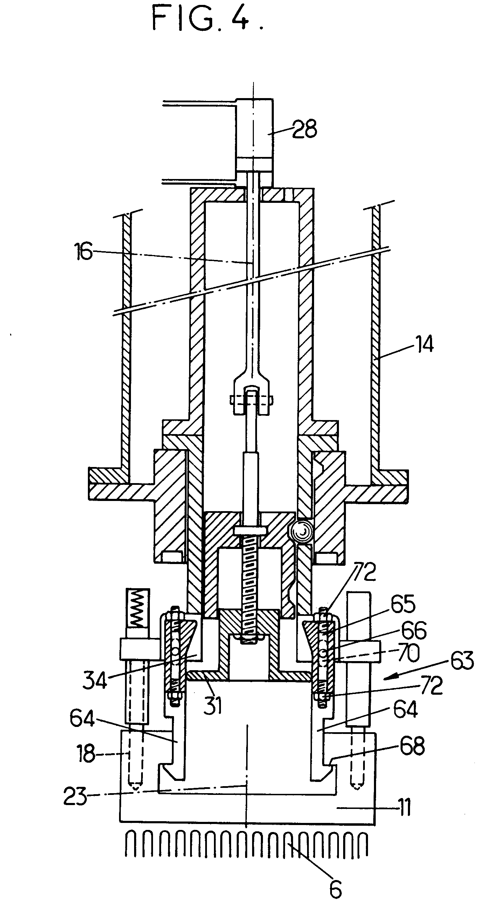

Dans la variante de réalisation montrée en figure 4, le réglage de l'inclinaison de l'axe 23 des moyens de verrouillage est effectué par ajustage individuel du niveau des becs 68 d'appui des crochets de pince 64, par rapport au support 34. Ainsi la position du bec peut être ajustée, par rapport à l'axe 66 de basculement autour du support 34.

La disposition qui vient d'être décrite a l'avantage d'être très simple. En contrepartie, elle exige un ajustage manuel et n'est en conséquence acceptable que lorsque les assemblages combustibles présentent tous une cambrure du même ordre de grandeur. Au surplus, elle n'autorise que la compensation de déformations limitées. Pour permettre un réglage plus fréquent, les écrous 65 (ou d'autres moyens manuels de réglage) peuvent être remplacés par des micro-moteurs de levée et d'abaissement des crochets.

L'invention est applicable quel que soit le mode de commande choisi (manuel, téléguidé ou télécommandé) et se prête par ailleurs à tout mode d'actionnement des moyens déflecteurs et des moyens de verrouillage.

Plusieurs solutions sont possibles. En particulier la partie haute du crochet peut contenir un coulisseau 70 portant l'axe 66 qui traverse des trous allongés du crochet. La hauteur du coulisseau dans le crochet est ajustable à l'aide d'écrous 72 vissés sur des prolongements filetés du coulisseau. Dans un autre mode de réalisation, le crochet est en deux parties. La partie basse est fixée à une tige filetée en saillie vers le haut, traversant la partie haute qui porte l'axe 66. Des cales d'ajustage sont interposées entre les deux parties qui sont solidarisées à l'aide d'un écrou vissé sur la partie de la tige qui déborde de la partie haute.

## Revendications

1. Grappin de manutention pour une machine de manutention d'assemblage combustible nucléaire, comprenant une partie supérieure (14,41) destinée à être solidarisée de la partie basse (3) d'un mât vertical d'une machine de manutention et des moyens de verrouillage sur la pièce d'extrémité supérieure (11) d'un assemblage combustible nucléaire,
caractérisé par des moyens déflecteurs reliant la partie supérieure (14,41) aux moyens de verrouillage (12,64) et permettant d'imposer à l'axe longitudinal des moyens de verrouillage, et donc à l'axe de la pièce d'extrémité (11) qui lui est fixée, une position ayant une inclinaison ajustable à volonté par rapport à l'axe vertical (16) de la partie supérieure.

2. Grappin selon la revendication 2, caractérisé en ce que les moyens déflecteurs comprennent un joint universel et des moyens moteurs.

3. Grappin selon la revendication 1, caractérisé en ce que le joint universel comprend une rotule (21) excentrée par rapport à l'axe longitudinal (16) de la partie supérieure (14) et en ce que les moyens moteurs comprennent des vérins répartis autour de l'axe (16) de la partie supérieure, la rotule et les vérins reliant la partie supérieure à une partie inférieure (15) équipée des moyens de verrouillage (12, 18).

4. Grappin selon la revendication 2, caractérisé en ce que le joint universel (42) est constitué par une rotule dont le centre est situé sur l'axe longitudinal (16) de la partie inférieure du mât (3) et en ce que les moyens moteurs sont interposés entre l'élément mâle (46) de la rotule (42), appartenant à une partie inférieure (43) du grappin munie des moyens de verrouillage, et la partie supérieure (41).

5. Grappin selon la revendication 4, caractérisé en ce que les moyens moteurs comprennent au moins trois vérins (58) régulièrement répartis angulairement autour d'un embout (47) prolongeant l'élément mâle (46) de la rotule et agissant dans le sens radial.

6. Grappin selon la revendication 1, caractérisé en ce que les moyens déflecteurs comprennent, pour chacun des crochets (64) de pince appartenant aux moyens de verrouillage, un mécanisme de réglage individuel du niveau du bec d'accrochage (68).

7. Grappin selon la revendication 6, caractérisé en ce que les moyens de réglage individuels sont à commande manuelle ou constitués par des micro-moteurs.
